# EUROPÄISCHE PATENTSCHRIFT

(11) **EP 2 492 082 B1**
(45) Veröffentlichungstag und Bekanntmachung des Hinweises auf die Patenterteilung: **10.05.2017**
(21) Anmeldenummer: 12401015.8
(22) Anmeldetag: 30.01.2012
(51) Int. Cl.: B29C 57/04

(54) **Vorrichtung und Verfahren zum Aufweiten des Endes eines Kunststoffrohres**
Method and device for expanding the end of a plastic tube
Dispositif et procédé d'élargissement de l'extrémité d'un tuyau en matière synthétique

(30) Priorität: 28.02.2011 DE 102011000975
(43) Veröffentlichungstag der Anmeldung: 29.08.2012
(73) Patentinhaber: Rothenberger AG, 65779 Kelkheim (DE)
(72) Erfinder: Greding, Arnd, 65719 Hofheim am Taunus (DE)
(74) Vertreter: Launhardt, Thomas

(56) Entgegenhaltungen:
- EP-A1- 1 938 950
- DE-A1-102008 061 442
- DE-U- 7 508 327
- FR-A1- 2 451 235

## Beschreibung

Die Erfindung betrifft eine Vorrichtung zum Aufweiten des Endes eines Rohres, welches aus einem ein Formgedächtnis aufweisenden Kunststoff besteht, gemäß dem Oberbegriff des Anspruchs 1.

Kunststoffrohre kommen zunehmend für Rohrleitungen in der Gas- und Trinkwasserversorgung zum Einsatz. Häufig werden dazu solche Kunststoffrohre verwendet, die ein sogenanntes Formgedächtnis haben. Diese Kunststoffrohre lassen sich einfach verformen und sind nach der Verformung bestrebt, in ihre ursprüngliche Form zurückzukehren.

Eine derartige Materialeigenschaft findet sich bevorzugt bei Rohren, die aus vernetzten Polyolefinen oder aus vernetztem Polyethylen hergestellt sind. Es handelt sich dabei um Kunststoffe mit ausgeprägter räumlicher Vernetzung, beispielsweise der Klasse PE-X oder XLPE.

Durch das Formgedächtnis ist das Verbinden der Rohre zu einer Rohrleitung vereinfacht und erleichtert. Zwei Kunststoffrohre lassen sich miteinander verbinden, indem die einander zugewandten Enden der Kunststoffrohre aufgeweitet werden und ein Verbindungselement, wie beispielsweise ein Fitting, in die aufgeweiteten Enden der Kunststoffrohre eingeschoben wird. Durch das Formgedächtnis der Kunststoffrohre kommt es zu einem Schrumpfen der aufgeweiteten Enden, sodass am Ende des Schrumpfvorgangs die Rohrenden den jeweils eingeschobenen Abschnitt des Verbindungselements fest umfassen und somit die gewünschte Rohrverbindung hergestellt ist. Zum Verbinden der Rohre sind somit lediglich die Rohrenden aufzuweiten und das Verbindungselement in die aufgeweiteten Rohrenden einzustecken.

Zum Aufweiten der Rohrenden werden spezielle Vorrichtungen eingesetzt, wie sie unter anderem aus der EP 0 725 908 A1 bekannt sind. Die Vorrichtungen weisen eine Vielzahl von in Radialrichtung aufspreizbaren Spannbacken auf. Die Spannbacken werden in das aufzuweitende Rohrende eingeschoben und unter Aufweiten des Rohrendes auseinandergespreizt. Häufig findet der Aufweitungsvorgang in mehreren Aufweitungsschritten statt, sodass das Rohrende stufenweise auf das gewünschte Aufweitungsmaß vergrößert wird.

Üblicherweise ist eine fertige Rohrverbindung mittels der Kunststoffrohre mit Formgedächtnis relativ schnell hergestellt, da durch das Schrumpfen des aufgeweiteten Rohrendes bereits nach kurzer Zeit eine feste Rohrverbindung bewirkt ist.

Es hat sich jedoch gezeigt, dass die Umgebungstemperatur einen nicht vernachlässigbaren Einfluss auf die Dauer der Schrumpfung hat. Wenn die Rohrverbindung bei kalten Temperaturen vorgenommen wird, beispielsweise bei der Verlegung von Rohrleitungen in den Wintermonaten im Außenbereich oder in ungeheizten Räumen, kann es sein, dass eine fertige Rohrverbindung erst nach mehreren Stunden, teilweise sogar nach Tagen erreicht ist. Der Aufbau einer Rohrleitung aus vielen miteinander verbundenen Kunststoffrohren ist dadurch erheblich erschwert. Beispielsweise kann eine Dichtigkeitsprüfung der Rohrleitung erst viel später nach der Leitungsmontage durchgeführt werden.

Eine gattungsgemäße Vorrichtung ist aus der DE 10 2008 061 442 A1 bekannt. Eine weitere Vorrichtung zum Aufweiten von Rohrenden ist aus der DE 600 09 436 T2 bekannt.

Der Erfindung liegt die Aufgabe zugrunde, eine Vorrichtung zum Aufweiten des Endes eines aus einem Kunststoff mit Formgedächtnis bestehenden Rohres mit den eingangs genannten Merkmalen bereitzustellen, durch welche eine stabile und feste Rohrverbindung unter Nutzung eines aufgeweiteten Rohrendes auch bei geringen Umgebungstemperaturen bereits nach einer angemessenen Zeit erreicht wird.

Diese Aufgabe wird mit einer Vorrichtung zum Aufweiten des Endes eines aus einem Kunststoff mit Formgedächtnis bestehenden Rohres gelöst, welche die Merkmale des Anspruchs 1 aufweist. Vorteilhafte Ausgestaltungen der Erfindung ergeben sich aus den Unteransprüchen, der nachfolgenden Beschreibung und den Figuren.

Eine erfindungsgemäße Vorrichtung zum Aufweiten des Endes eines Rohres, welches aus einem ein Formgedächtnis aufweisenden Kunststoff besteht, hat mehrere Spannelemente, welche jeweils eine gegen die Innenfläche des Rohrendes in Wirkstellung bringbare Spannfläche aufweisen und in radialer Richtung bezüglich einer Mittelachse von einer Ausgangslage in eine nach außen ausgestellte Lage bewegbar sind. In der Ausgangslage sind die Spannelemente über einen vorgegebenen Längenabschnitt bzw. eine vorgegebene Strecke in das Rohrende einführbar. In der ausgestellten Lage sind die Spannelemente mit ihrer Spannfläche gegen die Innenfläche des Rohrendes in Wirkstellung gebracht, sodass durch Überführen der in das Rohrende eingeführten Spannelemente von der Ausgangslage in die ausgestellte Lage das Rohrende aufgeweitet wird.

Bevorzugt sind die Spannelemente um die Mittelachse verteilt angeordnet. Bevorzugt weisen die Spannelemente, insbesondere das jeweilige Spannelement, einen im Wesentlichen kreisbogenförmigen Außenumfang auf, welche bevorzugt die Spannfläche, insbesondere die jeweilige Spannfläche, bilden. Bevorzugt liegen die Spannelemente in der Ausgangsstellung benachbart zueinander.

Bevorzugt sind die Spannelemente derart ausgebildet, dass bezüglich der Mittelachse der radiale Abstand der jeweiligen Spannfläche, in Einführrichtung gesehen, von vorne nach hinten hin zumindest teilweise größer wird. Dadurch lassen sich mit den gleichen Spannelementen Kunststoffrohre mit verschiedenen Durchmessern aufweiten. Im Zuge der Erfindung ist unter Einführrichtung diejenige Richtung zu verstehen, in welche die Spannelemente in das Rohrende eingeführt werden.

Bevorzugt sind die Spannflächen derart ausgebildet, dass zumindest in der Ausgangsstellung der Spannelemente, die Spannflächen zusammen eine sich in axialer Richtung erstreckende im Wesentlichen konusförmige Form bilden. Die Oberfläche kann mittels einer Riffelung versehen sein. Auch kann die von den Spannflächen gebildete Umfangsfläche sich stufenförmig erweitern.

Weiterhin weist die erfindungsgemäße Vorrichtung eine Einrichtung zum Bewegen der Spannelemente von der Ausgangslage in die ausgestellte Lage und gegebenenfalls zurück in die Ausgangslage auf.

Nach der Erfindung ist ein Stellglied vorgesehen, durch welches der radiale Abstand der jeweiligen Spannfläche zu der Mittelachse in der ausgestellten Lage veränderbar ist.

Indem der radiale Abstand der Spannflächen zu der Mittelachse in der ausgestellten Lage veränderbar ist, lässt sich das Spiel in radialer Richtung variieren, mit welchem das aufgeweitete Ende des Rohres den darin eingeführten Abschnitt eines Verbindungselementes umfasst. Das Spiel kann flexibel, je nach Erfordernis, vergrößert oder verkleinert und damit die Dauer für den Schrumpfungsvorgang des aufgeweiteten Rohrendes verändert werden.

Eine Vergrößerung des Bewegungsfreiraums bzw. des Spiels zwischen dem aufgeweiteten Ende des Rohres und dem darin eingeführten Abschnitt eines Verbindungselementes führt zu einer verlängerten Zeitdauer bis durch den Schrumpfungsvorgang des aufgeweiteten Rohrendes eine feste und stabile Verbindung, also eine fertige Verbindung zwischen dem Verbindungselement und dem Rohr erreicht ist. Im umgekehrten Fall ist durch eine Verkleinerung des Spiels zwischen dem aufgeweiteten Rohrende und dem darin eingeführten Abschnitt des Verbindungselementes die Zeitdauer für den Schrumpfungsvorgang verkürzt, um eine feste und stabile Verbindung zwischen Rohr und Verbindungselement zu erreichen.

Durch die erfindungsgemäße Maßnahme kann das Spiel in der Weise verringert werden, dass das aufgeweitete Rohrende nur geringfügig zurückzuschrumpfen braucht, um eine feste und stabile Verbindung mit dem Verbindungselement zu bewirken. Durch die erfindungsgemäße Maßnahme kann damit dem langsamen Zurückschrumpfen bei geringer Temperatur, wie sie bei der Verlegung der Rohrleitungen in den kalten Wintermonaten häufig vorliegt, wirkungsvoll entgegengewirkt werden, indem der radiale Abstand der Spannflächen zu der Mittelachse in der ausgestellten Lage so weit verringert wird, dass ein Verbindungselement beispielsweise gerade noch ohne eine zusätzliche Einführhilfe einführbar ist. Es ist damit bereits durch einen geringfügigen Schrumpfungsvorgang eine feste Verbindung zwischen dem Rohr und dem Verbindungselement erreicht.

Das Stellglied kann den radialen Abstand der Spannfläche eines Spannelements, insbesondere eines einzigen Spannelements, zu der Mittelachse verändern. Auch kann das Stellglied dazu ausgebildet sein, den radialen Abstand sämtlicher Spannflächen zu der Mittelachse zu verändern. Es ist denkbar, dass das Stellglied den radialen Abstand der Spannflächen zu der Mittelachse in gleicher Weise verändert. Auch ist es denkbar, dass der Abstand einer jeden Spannfläche zu der Mittelachse individuell durch das Stellglied verändert wird, sodass mehrere Spannflächen unterschiedliche Abstände zu der Mittelachse aufweisen können.

Es bietet sich an, dass das Stellglied dazu ausgebildet ist, dass der radiale Abstand der Spannflächen zu der Mittelachse in der ausgestellten Lage auf einen vorgegebenen Wert einstellbar ist bzw. eingestellt wird. Dadurch kann der Bewegungsfreiraum zwischen dem aufgeweiteten Rohrende und einem darin eingeführten Abschnitt eines Verbindungselements gezielt auf ein vorbestimmtes Spiel bzw. Übermaß eingestellt werden.

Um die Temperaturabhängigkeit des Schrumpfungsvorgangs bei dem Kunststoffrohr entsprechend zu berücksichtigen, bietet es sich an, dass das Stellglied dazu ausgebildet ist, den radialen Abstand der Spannflächen zu der Mittelachse in der ausgestellten Lage der Spannelemente in Abhängigkeit von der Temperatur, insbesondere Umgebungstemperatur, einzustellen. Hierdurch wird dem Einfluss der Temperaturabhängigkeit des Schrumpfungsvorgangs auf die Zeitdauer bis zur Erreichung einer festen und stabilen Rohrverbindung entgegengewirkt. Bevorzugt ist das Stellglied in der Weise ausgebildet, dass mit abnehmender Umgebungstemperatur, in welcher die Rohrverbindung realisiert werden soll, der Abstand der Spannflächen zu der Mittelachse in der ausgestellten Lage der Spannelemente verringert wird, sodass dadurch das Spiel zwischen dem aufgeweiteten Rohrende und den darin eingeführten Abschnitt eines Verbindungselements verringert ist und damit bereits nach geringer Rückschrumpfung des aufgeweiteten Rohrendes die feste und stabile Rohrverbindung vorliegt.

Um die Temperatur beim Einstellen des radialen Abstands der Spannflächen zu der Mittelachse zu berücksichtigen, kann eine Eingabeeinheit, insbesondere elektrische Eingabeeinheit, vorgesehen sein, mittels welcher Werte für eine Temperatur oder dergleichen Temperaturinformationen eingegeben werden können, um dem Stellglied oder einer mit dem Stellglied verbundenen elektrisches Steuereinheit Informationen zu der Temperatur beim Herstellen der Rohrverbindung zu geben, sodass das Stellglied auf der Basis des eingegebenen Wertes bzw. der eingegebenen Werte die Einstellung des radialen Abstandes der Spannflächen bzw. der jeweiligen Spannfläche zu der Mittelachse entsprechend vornimmt, vorzugsweise selbsttätig vornimmt. Dazu kann das Stellglied mittels eines elektrischen Antriebes betätigbar sein.

Auch ist es möglich, dass das Stellglied handbetätigbar ist.

Nach einer Ausgestaltung der Erfindung ist es vorgesehen, dass an dem Stellglied die Spannelemente drehfest gehalten. Dadurch ist eine einfache und sichere Handhabung der erfindungsgemäßen Vorrichtung beim Aufweiten des Rohrendes gewährleistet, da ein Einfädeln der Spannelemente in das Rohrende ohne störende Verdrehung der Spannelemente relativ gegenüber dem Stellglied in einfacher Weise erfolgen kann. Zugleich ist trotz der drehfest gehaltenen Spannelemente ein Einstellen des radialen Abstandes der Spannflächen zu der Mittelachse mittels des Stellgliedes ermöglicht.

Selbstverständlich kann es auch vorgesehen sein, dass die Spannelemente an dem Stellglied drehbar gehalten sind.

Bevorzugt sind die Spannelemente an dem Stellglied lösbar gehalten, beispielsweise mittels einer Verschraubung an das Stellglied bzw. das Gehäuse des Stellgliedes angeschraubt. Dazu kann an dem Stellglied bzw. dem Gehäuse des Stellgliedes ein Gewinde ausgebildet sein.

Nach der Erfindung ist es vorgesehen, dass das Stellglied an dem Gehäuse der Einrichtung zum Bewegen der Spannelemente von der Ausgangslage in die ausgestellte Lage bewegbar gehalten ist, sodass zum Verändern des radialen Abstandes der Spannflächen zu der Mittelachse das Stellglied eine Vorschubbewegung in axialer Richtung ausführt, beispielsweise wenn das Stellglied händisch betätigt wird. Ergänzend kann das Stellglied an einem Übertragungsglied zum Übertragen einer Betätigungsbewegung auf die Spannelemente, insbesondere dessen Gehäuse, bewegbar gehalten sein, so dass zum Verändern des radialen Abstandes der Spannflächen zu der Mittelachse das Stellglied eine Vorschubbewegung in axialer Richtung ausführt, beispielsweise wenn das Stellglied händisch betätigt wird. Dadurch ist das Stellglied in konstruktiv einfacher Weise in die Vorrichtung integriert, um ein Verändern des radialen Abstands der Spannflächen zu der Mittelachse in der ausgestellten Lage der Spannelemente vornehmen zu können, ohne dass die Funktion des Übertragungsgliedes oder der Einrichtung zum Bewegen der Spannelemente von der Ausgangslage in die ausgestellte Lage beeinträchtigt wird.

Indem das Stellglied eine Vorschubbewegung in axialer Richtung ausführt, ist in technisch besonders einfacher Weise realisiert, dass der radiale Abstand der Spannflächen zu der Mittelachse in der ausgestellten Lage der Spannelemente verändert werden kann bzw. verändert wird. Die Vorschubbewegung kann beispielsweise durch eine Verschraubung des Stellgliedes realisiert sein, welche in das Gehäuse des Übertragungsgliedes eingeschraubt ist, wobei die Vorschubbewegung durch Verdrehen der Verschraubung relativ zu dem Gehäuse des Übertragungsgliedes erreicht ist.

Es bietet sich an, dass eine Bewegungsbegrenzung für das Stellglied vorgesehen ist, durch welche die Vorschubstrecke des Stellgliedes begrenzt ist. Dadurch ist ein Bewegen des Stellgliedes bis zu der Begrenzung sicher gewährleistet und eine Störung durch Herausdrehen des Stellgliedes aus dem Gewinde des Gehäuses vermieden.

Nach einer Ausgestaltung der Erfindung sind Fixiermittel vorgesehen, durch welche der radiale Abstand der jeweiligen Spannfläche zu der Mittelachse in der ausgestellten Lage festlegbar ist.

Indem durch die Fixiermittel der radiale Abstand der Spannflächen zu der Mittelachse in der ausgestellten Lage festlegbar ist, kann ein mittels des Stellgliedes eingestellter radialer Abstand der Spannflächen bzw. der jeweiligen Spannfläche zu der Mittelachse in der ausgestellten Lage auch bei einwirkenden Kräften, beispielsweise im Zuge eines an einem Rohrende ausgeführten Aufweitvorganges, exakt gehalten werden. Durch die Fixiermittel lässt sich somit eine Aufweitung des Rohrendes auf minimales Übermaß mit hoher Präzision exakt ausführen. Auch ist eine Aufweitung eines anderen Rohrendes auf das gleiche minimale Übermaß exakt wiederholbar. Die erfindungsgemäße Vorrichtung ermöglicht damit, dass zur Erzielung einer festen Rohrverbindung auf eine kleinstmögliche Rückschrumpfung des Rohrendes abgestellt werden kann, um auch bei geringsten Umgebungstemperaturen durch ausreichende Rückschrumpfung eine feste Verbindung zwischen dem Rohr mit seinem aufgeweiteten Ende und dem in das aufgeweitete Ende eingesteckten Rohr zu erreichen.

Durch die Fixiermittel ist es vermieden, dass beim Einfädeln der Spannelemente in das aufzuweitende Rohr oder bei dem Herausnehmen der Spannelemente aus dem aufgeweiteten Rohrende es zu einer ungewollten Verstellung des mittels des Stellgliedes eingestellten radialen Abstandes der Spannflächen zu der Mittelachse in der ausgestellten Lage kommt.

Nach einer Ausgestaltung der Erfindung ist es vorgesehen, dass die Fixiermittel unabhängig von dem Stellmechanismus des Stellgliedes zum Verändern des radialen Abstandes der jeweiligen Spannfläche zu der Mittelachse in der ausgestellten Lage wirken. Dadurch sind die Fixiermittel in ihrer Fixierfunktion von dem Stellglied entkoppelt, so dass die Fixierung des eingestellten radialen Abstandes der Spannflächen zu der Mittelachse in der ausgestellten Lage unbeeinflusst von dem Stellglied flexibel vorgenommen werden kann.

Selbstverständlich kann es auch vorgesehen sein, dass das Stellglied die Funktion des Fixiermittels ausübt. Beispielsweise kann der Stellmechanismus des Stellgliedes durch miteinander in Wirkkontakt gebrachte Gewindemittel realisiert sein, wobei die Gewinde selbsthemmend sind und insofern eine Fixierwirkung hinsichtlich des eingestellten radialen Abstandes der Spannflächen zu der Mittelachse in der ausgestellten Lage bewirken.

Nach einer Ausgestaltung der Erfindung sind die Fixiermittel durch wenigstens ein Fixierelement gebildet, welches an dem Gehäuse des Übertragungsgliedes bzw. der Einrichtung zum Bewegen der Spannelemente von der Ausgangslage in die ausgestellte Lage oder an dem Stellglied bewegbar gehalten ist und gegen das Stellglied oder das Gehäuse kraftschlüssig und/oder formschlüssig in Wirkstellung bringbar ist, um den eingestellten radialen Abstand der jeweiligen Spannfläche zu der Mittelachse in der ausgestellten Lage festzulegen. Dadurch ist eine Fixierung des mittels des Stellgliedes eingestellten radialen Abstandes der Spannflächen zu der Mittelachse in der ausgestellten Lage technisch einfach realisiert.

Sofern das Stellglied zum Ausführen einer Vorschubbewegung in axialer Richtung ausgebildet ist, bietet es sich an, dass durch das Fixierelement das Stellglied relativ gegenüber dem Gehäuse gegen eine Vorschubbewegung in axialer Richtung fixiert werden kann.

Das Fixierelement kann ein Gewindestift, eine Madenschraube oder ein dergleichen mit einem Gewinde versehenes Verbindungselement sein, welches beispielsweise durch den Bediener der erfindungsgemäßen Vorrichtung in Klemmposition und/oder eine Rastposition gegen das Gehäuse oder das Stellglied gebracht wird, um den mittels des Stellgliedes eingestellten radialen Abstand der Spannfläche zu der Mittelachse in der ausgestellten Lage festzulegen.

Auch kann das Fixierelement ein an dem Gehäuse oder dem Stellglied gehaltenes Rastelement sein, welches beispielsweise durch die Kraft eines Federelementes in eine Aufnahme des Stellgliedes oder des Gehäuses in Wirkstellung bringbar ist, um eine Arretierung zu erzeugen. Dabei können mehrere Aufnahmen vorgesehen sein, so dass eine Fixierung des Abstandes der Spannflächen zu der Mittelachse in der ausgestellten Lage vorzugsweise selbsttätig stattfindet, wenn beim Einstellen des radialen Abstandes das Fixierelement gegen eine der Aufnahmen in Rastposition bzw. Arretierposition gelangt.

Das Rastelement kann beispielsweise als federndes Druckstück ausgebildet sein und die Aufnahme durch mehrere Kugelmulden gebildet sein, in welches das federnde Druckstück jeweils zur Einrastung gelangen kann. Die Kugelmulden können in einer vorgegebenen Teilung angeordnet sein, um eine genaue Einstellung des radialen Abstandes der Spannflächen zu der Mittelachse in der ausgestellten Lage unter Ausbildung einer Arretierverbindung bzw. Rastverbindung zu erreichen.

Nach einer weiteren Ausgestaltung der Erfindung kann es vorgesehen sein, dass das Übertragungsglied durch einen translatorisch hin und her bewegbaren Kolben gebildet ist, welcher in einer durch die Spannelemente gebildeten Öffnung axial nach außen unter radialer Ausstellung der Spannelemente bewegbar ist. Ein solches Übertragungsglied ist in technisch einfacher Weise realisierbar und ermöglicht besonders einfach ein Aufspreizen der Spannelemente in radialer Richtung.

Mit Vorteil ist der auf die Spannelemente wirkende Hubweg des Kolbens durch das Stellglied um eine Strecke veränderbar ist. Indem das Stellglied auf den Hubweg des Kolbens wirkt, ist der radiale Abstand der Spannflächen zu der Mittelachse in der ausgestellten Lage der Spannelemente in technisch besonders einfacher Weise einstellbar.

Nach einer bevorzugten Ausgestaltung der Erfindung ist eine elektrische Steuereinheit vorgesehen, welche die Einrichtung zum Bewegen der Spannelemente derart ansteuert, dass in mehreren aufeinanderfolgenden Zyklen bzw. Vorgängen jeweils die Spannelemente von der Ausgangslage oder einer Zwischenlage in die ausgestellte Lage oder eine Zwischenlage bewegt werden, insbesondere von dort zurück in die Ausgangslage oder eine Zwischenlage bewegt werden. Dadurch ist für den Monteur das Aufweiten des Endes eines Kunststoffrohres erleichtert, insbesondere wenn die Aufweitung des Rohrendes in mehreren Stufen erfolgt. Der Monteur braucht lediglich die erfindungsgemäße Vorrichtung einzuschalten bzw. die Steuereinheit zu aktivieren, sodass die mehreren aufeinanderfolgenden Zyklen bzw. Spreizvorgänge durch die Spannelemente ausgeführt werden, ohne zwischendurch eine weitere Betätigung der Steuereinheit oder der erfindungsgemäßen Vorrichtung vornehmen zu müssen.

Es ist dadurch besonders ein stufenweises Aufweiten begünstigt und erleichtert, da der Monteur nach jedem Zyklus des Aufweitens des Rohrendes die Spannelemente weiter in das bereits in einem vorherigen Schritt aufgeweitete Rohrende weiter einzuschieben, um dann mit dem folgenden Zyklus eine weitere Teilaufweitung des Rohrendes zu vorzunehmen. Das Rohrende ist somit in besonders einfacher Weise durch die mehreren aufeinanderfolgenden Aufspreizungsvorgänge solange auf Zwischenmaße geweitet, bis das angestrebte endgültige Aufweitungsmaß erreicht ist.

Bevorzugt steuert die elektrische Steuereinheit die Einrichtung zum Bewegen der Spannelemente derart an, dass nach jedem Bewegungszyklus der Spannelemente bzw. jedem Aufspreizvorgang durch die Spannelemente eine vorgegebene Zeitdauer die Spannelemente in der Ausgangslage oder einer Zwischenlage im Wesentlichen ohne Bewegung verbleiben. Diese Ruhephase dauert bevorzugt über eine so lange Zeitdauer an, dass der Monteur ohne Weiteres das in einem vorherigen Zyklus aufgeweitete Rohrende weiter auf die Spannelemente aufschieben kann, bevor ein weiterer Aufweitungsvorgang beginnt.

Bevorzugt sollte wenigstens ein Betätigungselement zum Einschalten oder Aktivieren der Steuerungseinheit und ggf. der Einrichtung zum Bewegen der Spannelemente vorgesehen sein. Bevorzugt sollte die Einrichtung zum Bewegen der Spannelemente durch einen elektrischen Antrieb gebildet sein bzw. einen elektrischen Antrieb zum Bewegen der Spannelemente aufweisen. Der elektrische Antrieb kann ein netzstrombetriebener Elektromotor sein. Auch ist ein akkubetriebener Elektromotor als elektrischer Antrieb denkbar.

Es bietet sich an, dass wenigstens ein Betätigungselement vorgesehen ist, bei dessen Betätigung die Bewegung der Spannelemente beendet ist. Dadurch ist es möglich, dass die voreingestellten mehreren aufeinanderfolgenden Zyklen nicht bis zum Ende ausgeführt werden, sondern bereits früher die Aufspreizbewegung der Spannelemente beendet wird. Das Betätigungselement, insbesondere das Betätigungselement und die Steuereinheit sollten vorzugsweise derart ausgebildet sein, dass bei Betätigung des Betätigungselementes die aufeinanderfolgenden Bewegungszyklen der Spannelemente beendet sind, indem ein gerade ausgeführter Zyklus noch beendet wird.

Es bietet sich ferner an, dass das Betätigungselement zum Einschalten und das Betätigungselement zum Beenden der Bewegungszyklen der Spannelemente durch ein gemeinsames Betätigungselement gebildet sind.

Nach einer weiteren Ausgestaltung der Erfindung ist es vorgesehen, dass die Spannelemente in radialer Richtung bezüglich der Mittelachse über eine Strecke bewegbar sind, welche kleiner als der radiale Abstand der Innenfläche des abschließend aufgeweiteten Rohrendes zu der Mittelachse ist. Dadurch ist in konstruktiv einfacher Weise sicher vermieden, dass die Aufweitung des Rohrendes durch lediglich einen einzigen Aufspreizvorgang der Spannelemente vollzogen wird. Ein solcher einziger Aufspreizvorgang der Spannelemente zum Aufweiten des Rohrendes ist besonders bei den Kunststoffrohren mit Formgedächtnis zu vermeiden, da sich dann unerwünschte starke Einprägungen an der Innenseite des aufgeweiteten Rohrendes ergeben, welche durch die Spannflächen hervorgerufen werden. Derartige starke Einprägungen sind unerwünscht, da dadurch eine Leckagebildung bei der Rohrverbindung begünstigt ist.

Nach einer weiteren Ausgestaltung der Erfindung ist eine optische und/oder akustische Ausgabeeinheit vorgesehen, welche den vorzugsweise eingestellten radialen Abstand der Spannflächen zu der Mittelachse in der ausgestellten Lage der Spannelemente direkt und/oder indirekt, beispielsweise als Übermaßangabe oder Durchmesserangabe, ausgibt. Durch diese Maßnahme ist die Bedienerfreundlichkeit der erfindungsgemäßen Vorrichtung und dessen einfache Handhabung unterstützt, da der Monteur die Information erhält, auf welches Maß das Rohrende beispielsweise maximal aufgeweitet werden kann.

Die Erfindung umfasst weiterhin die Verwendung einer Vorrichtung zum Aufweiten eines Rohrendes der vorstehend beschriebenen Art zum Aufweiten des Endes eines aus einem Kunststoff mit Formgedächtnis bestehenden Rohres.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1A: eine mögliche Ausführungsform einer Vorrichtung zum Aufweiten des Endes eines aus einem Kunststoff mit Formgedächtnis bestehenden Rohres in einem Längsschnitt, wobei die Spannelemente der Vorrichtung auf ein erstes maximales Aufweitmaß eingestellt sind und sich in der radial nach außen gestellten Lage befinden,
- Fig. 1B: die Vorrichtung gemäß der Figur 1 in Vorderansicht, wobei die Spannelemente der Vorrichtung auf das erste maximale Aufweitmaß eingestellt sind und sich in der radial nach außen gestellten Lage befinden,
- Fig. 2: die Vorrichtung gemäß der Fig. 1A im Längsschnitt, wobei die Spannelemente der Vorrichtung auf ein zweites maximales Aufweitmaß eingestellt sind und sich in der nach außen ausgestellten Lage befinden und
- Fig. 3: die Vorrichtung gemäß der Figur 1A im Längsschnitt, wobei die Spannelemente auf das zweite maximale Aufweitmaß gemäß der Figur 2 eingestellt sind und sich in einer Ausgangslage befinden.

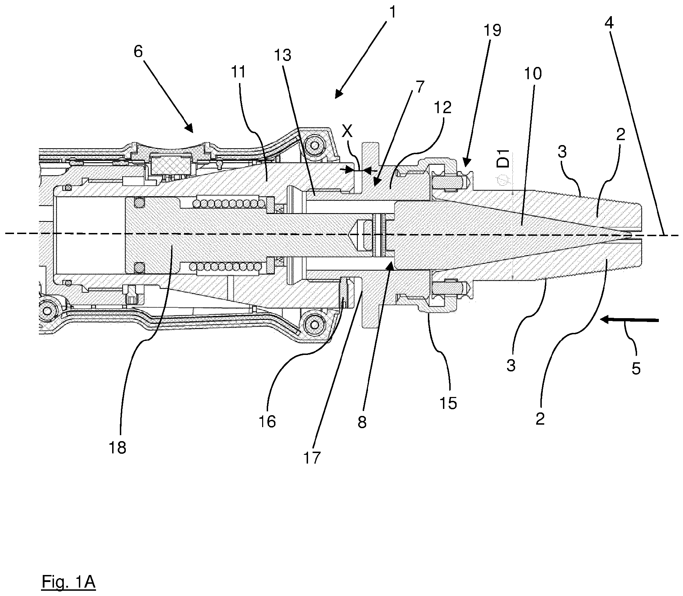

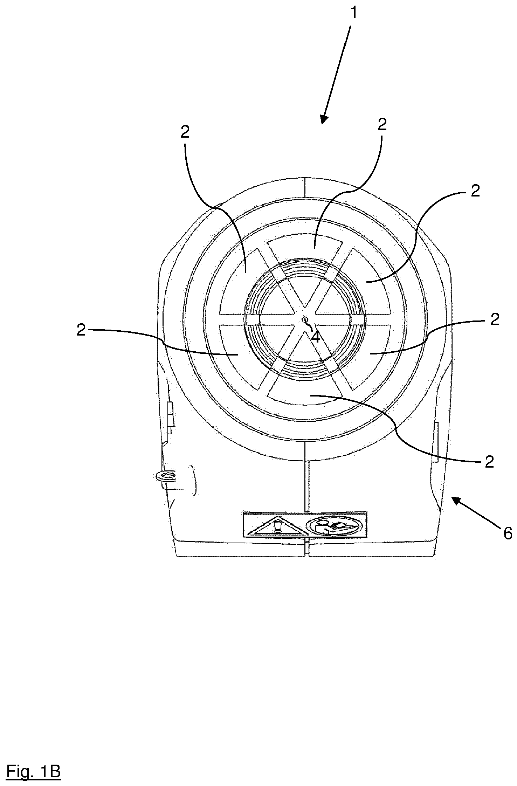

Figuren 1A und 1B zeigen - in schematischer Darstellung - eine Vorrichtung 1 zum Aufweiten eines Rohrendes, insbesondere des Endes eines Rohres, welches aus einem ein Formgedächtnis aufweisenden Kunststoff besteht. Die Vorrichtung 1 hat mehrere Spannelemente 2, welche um eine Mittelachse 4 der Vorrichtung 1 verteilt angeordnet sind. Die Spannelemente 2 weisen jeweils zumindest eine Spannfläche 3 auf, welche gegen die Innenfläche des Endes eines (in der Fig. 1 nicht dargestellten) Kunststoffrohres in Wirkstellung bringbar sind, um das Rohrende in radialer Richtung aufzuweiten.

Zum Aufweiten des Rohrendes sind die Spannelemente 2 in radialer Richtung bezüglich der Mittelachse 4 von einer Ausgangslage in eine nach außen ausgestellte Lage bewegbar. In der Ausgangslage sind die Spannelemente 2 über einen vorgegebenen Längenabschnitt in Richtung der Mittelachse 4 in das Rohrende einführbar. In der ausgestellten Lage sind die Spannelemente 2 mit ihrer jeweiligen Spannfläche 3 gegen die Innenfläche des Rohrendes in Wirkstellung gebracht, sodass durch Überführen der in das Rohrende eingeführten Spannelemente 2 von der Ausgangslage in die ausgestellte Lage das Rohrende aufgeweitet wird. Die Vorrichtung 1 weist ferner eine Einrichtung 6 zum Bewegen der Spannelemente 2 von der Ausgangslage in die ausgestellte Lage und vorzugsweise zurück in die Ausgangslage auf.

Es ist ein Stellglied 7 vorgesehen, durch welches der radiale Abstand der jeweiligen Spannfläche 3 zu der Mittelachse 4 in der ausgestellten Lage der Spannelemente 2 veränderbar ist, insbesondere durch Handbetätigung veränderbar ist.

Das Stellglied 7 ist dazu an der Einrichtung 6 zum Bewegen der Spannelemente 2 von der Ausgangslage in die ausgestellte Lage bewegbar gehalten, sodass zum Verändern des radialen Abstandes der Spannflächen 3 zu der Mittelachse 4 das Stellglied 7 eine Bewegung in Richtung der Mittelachse 4 ausführt. Es ist dazu das Stellglied 7 an dem Gehäuse 11 der Einrichtung 6 bewegbar gehalten.

Bevorzugt sind ferner an dem Stellglied 7 die Spannelemente 2 drehfest gehalten, insbesondere lösbar gehalten.

Die Einrichtung 6 zum Bewegen der Spannelemente 2 von der Ausgangslage in die ausgestellte Lage ist mit einem Übertragungsglied 8 mechanisch gekoppelt, welches eine Betätigungsbewegung auf die Spannelemente 2 überträgt.

Bevorzugt weist die Einrichtung 6 zum Bewegen der Spannelemente 2 von der Ausgangslage in die ausgestellte Lage einen Kolben 18 auf, welcher in dem Gehäuse 11 der Einrichtung 6 geführt ist. Bevorzugt ist ein Kolben 9 des Übertragungsgliedes 8 mit dem Kolben 18 mechanisch verbunden, insbesondere in axialer Richtung fest verbunden. Der Kolben 9 und der Kolben 18 können auch durch ein gemeinsames Bauteil gebildet sein.

Der Kolben 9 des Übertragungsgliedes 8 liegt bevorzugt innerhalb des Stellgliedes 7 und ist bevorzugt an einer Wandung des Stellgliedes 7 translatorisch hin und her bewegbar geführt.

Der Kolben 9 des Übertragungsgliedes 8 kann in einer durch die Spannelemente 2 gebildeten Öffnung 10 in Richtung der Mittelachse 4 nach außen unter radialer Ausstellung der Spannelemente 2 bewegt werden. Bevorzugt ist der Kolben 9 an seinem vorderen Ende in Art eines Kegels oder Kegelstumpfes ausgebildet. Diese bevorzugt schräg verlaufenden Flächen des Kolbens 9 treten mit korrespondierenden Innenflächen der Spannelemente 2 in Wirkstellung, wenn der Kolben 9 in axialer Richtung in Richtung nach außen bewegt wird. Durch diese Ausstellbewegung des Kolbens 9 gleitet die kegelförmige Umfangsfläche des Kolbens 9 an den korrespondierenden Innenflächen der Spannelemente 2 und erleichtert dadurch die radiale Aufspreizung der Spannelemente 2.

Wie aus der Fig. 1A ersichtlich ist, ist das Stellglied durch einen Wellenabschnitt 12 gebildet, welcher an seinem einen axialen Ende ein Gewinde, vorzugsweise Außengewinde 13 trägt, welches mit einem korrespondierenden Gewinde des Gehäuses 11 kämmt. Bevorzugt weist der Wellenabschnitt 12 an seinem anderen Ende ein Gewinde, insbesondere Außengewinde auf, welches zum Aufschrauben eines die Spannelemente 2 mit dem Wellenabschnitt 12 verbindenden Verbindungselementes 15 dient. Mittels des Verbindungselementes 15 sind die Spannelemente 2 drehfest an dem Wellenabschnitt 12 fixierbar. Durch die Schraubverbindung des Wellenabschnittes 12 mit dem Gehäuse 11 kann der auf die Spannelemente 2 wirkenden Hubweg des Kolbens 9 durch das Stellglied 7 um eine Strecke X verändert werden.

Die Spannelemente 2 und das Verbindungselement 15 bilden einen Expanderkopf 19, welcher auf das Stellglied 7 aufschraubbar ist.

Wie aus der Fig. 1A ersichtlich ist, ist dort der Wellenabschnitt 12 um die Strecke X von dem Gehäuse 11 in axialer Richtung nach außen bewegt. Diese Verschiebung ist begrenzt durch einen Anschlag, welcher beispielsweise durch einen mittels wenigstens eines Fixierelementes 16, insbesondere Stiftelement, erzeugten Vorsprung gebildet sein kann. Der Vorsprung ragt beispielsweise in die gewindeführende Öffnung des Gehäuses 11 hinein, gegen welchen der Wellenabschnitt 12 bei Erreichen der maximalen Strecke X anschlägt.

Das Fixierelement 16 kann ein Gewinde aufweisendes Verbindungselement, beispielsweise in Art einer Madenschraube oder Gewindestift sein, durch welche das Stellglied 7 gegen ein Verdrehen relativ gegenüber dem Gehäuse 11 gesichert werden kann. Das in das Gehäuse 11 eingeschraubte Fixierelement 16 kann dazu soweit in Richtung gegen das Stellglied 7 eingeschraubt sein, dass das Fixierelement 16 unter Ausbildung einer Klemmverbindung gegen das Stellglied 7 drückt und damit das Stellglied 7 gegen eine Drehbewegung relativ gegenüber dem Gehäuse 11 fixiert ist.

Durch Verdrehen des Wellenabschnittes 12 in die entgegengesetzte Richtung, wird der Wellenabschnitt 12 in Richtung gegen das Gehäuse 11 bewegt, bis ein Bund 17 des Wellenabschnittes 12 gegen die Stirnfläche des Gehäuses 11 in Kontakt gelangt und damit die Bewegung des Wellenabschnittes 12 in diese axiale Richtung begrenzt wird.

Die Fig. 1A zeigt die Vorrichtung 1 in derjenigen Stellung des Stellgliedes 7, bei welcher der auf die Spannelemente 2 wirkende Hubweg des Kolbens 9 durch das Stellglied 7 um die Strecke X verkürzt ist. Der Wellenabschnitt 12 ist dazu um die Strecke X in axialer Richtung von dem Gehäuse 11 herausgedreht. In diesem Zustand ist die Vorrichtung 1 auf ein erstes maximales Aufweitungsmaß D1 als Innendurchmesser für das aufgeweitete Ende des Kunststoffrohres eingestellt. In der Fig. 1A sind die Spannelemente 2 in diesem Zustand in der ausgestellten Lage dargestellt.

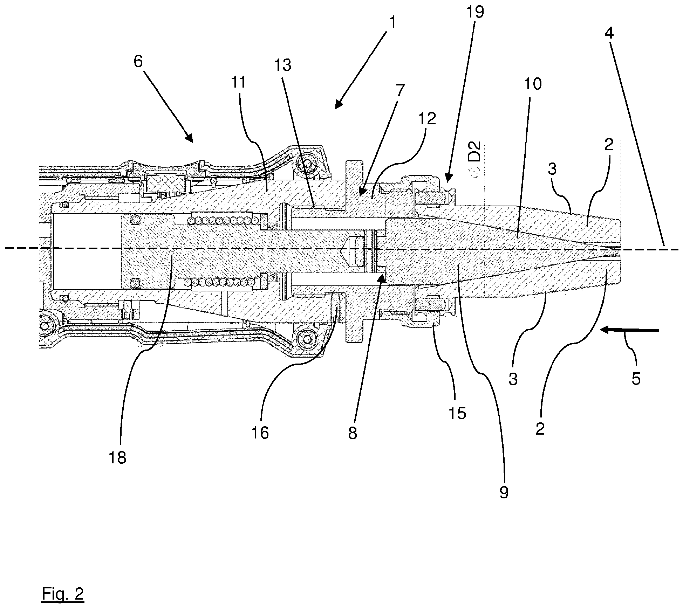

Fig. 2 zeigt die Vorrichtung 1 in der ausgestellten Lage der Spannelemente 2, welche mittels des Stellgliedes 7 auf ein zweites maximales Aufweitmaß D2 eingestellt ist. Das Stellglied 7 ist in Richtung gegen das Gehäuse 11 in axialer Richtung bewegt, insbesondere der Wellenabschnitt 12 bis zum Anschlag seines Bundes 17 gegen die Stirnseite des Gehäuses 11 geschraubt. Dadurch ist der auf die Spannelemente 2 wirkende Hubweg des Kolbens 9 durch das Stellglied 7 um die Strecke X vergrößert, sodass die Vorrichtung 1 dadurch auf das zweite maximale Aufweitmaß D2 eingestellt ist, welches größer als das erste maximale Aufweitmaß D1 ist.

Durch Verdrehen des Wellenabschnittes 12 zwischen den Positionen, wie sie in der Fig. 1A und der Fig. 2 dargestellt sind, lässt sich das maximale Aufweitungsmaß der Vorrichtung 1 je nach Erfordernis zwischen dem ersten maximalen Aufweitmaß D1 und dem zweiten maximalen Aufweitmaß D2 beliebig, insbesondere stufenlos, einstellen.

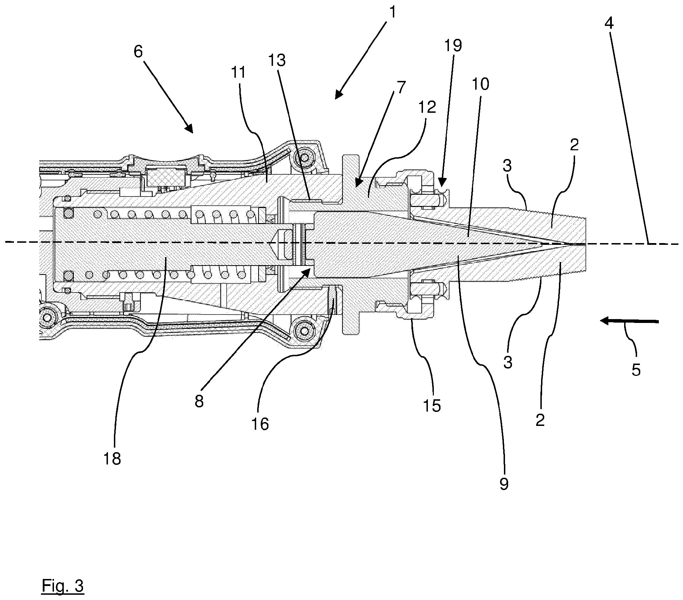

Fig. 3 zeigt die Vorrichtung 1 zum Aufweiten eines Rohrendes gemäß der Figuren 1A und 1B, wobei in der Figur 3 die Spannelemente 2 auf das zweite maximale Aufweitmaß D2 eingestellt sind. Im Unterschied zu der Figur 2 befinden sich die Spannelemente 2 in der Ausgangslage. In der Ausgangslage ist der Kolben 9 zusammen mit dem Kolben 18 in eine zurückgefahrene Position gebracht. In der Ausgangslage sind die Spannelemente 2 über einen vorgegebenen Längenabschnitt in Richtung der Mittelachse 4 in das Ende des (in den Figur 3 nicht dargestellten) aufzuweitenden Rohres einführbar.

Nach einer in den Figuren 1A, 1B, 2 und 3 nicht dargestellten Ausgestaltung kann ein Sensorelement vorgesehen sein, mittels welchem die Position des Stellgliedes 7, insbesondere des Wellenabschnittes 12 in axialer Richtung relativ gegenüber dem Gehäuse 11 erfasst wird, beispielsweise um die von dem Sensorelement gelieferten Informationen in einer elektrischen Steuerungs- und/oder Regelungseinrichtung zu nutzen, beispielsweise um das Stellglied 7 selbsttätig mittels der Regelungs- bzw. Steuerungseinrichtung anzusteuern und damit das Stellglied 7 selbsttätig auf ein vorgegebenes maximales Aufweitmaß einstellen zu können.

Die Spannelemente 2 sind bevorzugt mit ihrer jeweiligen Spannfläche 3 derart ausgestaltet, dass bezüglich der Mittelachse 4 der radiale Abstand der jeweiligen Spannfläche 3 in Einführrichtung 5 der Spannelemente 2 in das Ende des (in den Fig. 1 und 2 nicht dargestellten) Rohres gesehen, von vorne nach hinten, zumindest teilweise größer wird, insbesondere über einen axialen Abschnitt die Spannflächen 3 gemeinsam eine konusförmige Umfangsfläche bilden, welche sich von vorne nach hinten erweitert.

Es ist dadurch ein Aufweiten des Rohrendes durch mehrere Bewegungszyklen der Spannelemente 2 begünstigt, indem bei jedem Bewegungszyklus die Spannelemente 2 von der Ausgangslage in die ausgestellte Lage unter Aufweitung des Rohrendes bewegt werden, anschließend die Spannelemente 2 in die Ausgangslage zurückbewegt werden, wobei die Spannelemente 2 nach wenigstens einem Bewegungszyklus weiter in das Rohrende eingeführt werden.

### Bezugszeichenliste

- 1: Vorrichtung
- 2: Spannelemente
- 3: Spannfläche
- 4: Mittelachse
- 5: Einführrichtung
- 6: Einrichtung
- 7: Stellglied
- 8: Übertragungsglied
- 9: Kolben
- 10: Öffnung
- 11: Gehäuse
- 12: Wellenabschnitt
- 13: Außengewinde
- 15: Verbindungselement
- 16: Fixierelementes
- 17: Bund
- 18: Kolben
- 19: Expanderkopf

- X: Strecke
- D1: erstes maximales Aufweitmaß
- D2: zweites maximales Aufweitmaß

## Patentansprüche

1. Vorrichtung (1) zum Aufweiten des Endes eines Rohres (100), welches aus einem ein Formgedächtnis aufweisenden Kunststoff besteht, mit mehreren Spannelementen (2), welche eine gegen die Innenfläche des Rohrendes in Wirkstellung bringbare Spannfläche (3) aufweisen und in radialer Richtung bezüglich einer Mittelachse (4) von einer Ausgangslage in eine nach außen gestellte Lage bewegbar sind, wobei in der Ausgangslage die Spannelemente (2) über einen vorgegebenen Längenabschnitt in das Rohrende einführbar sind und in der ausgestellten Lage die Spannelemente (2) mit ihrer Spannfläche (3) gegen die Innenfläche des Rohrendes in Wirkstellung gebracht sind, so dass durch Überführen der in das Rohrende eingeführten Spannelemente (2) von der Ausgangslage in die ausgestellte Lage das Rohrende aufgeweitet wird, mit einer Einrichtung (6) zum Bewegen der Spannelemente (2) von der Ausgangslage in die ausgestellte Lage und vorzugsweise zurück in die Ausgangslage und mit einem Stellglied (7), durch welches der radiale Abstand der jeweiligen Spannfläche (3) zu der Mittelachse (4) in der ausgestellten Lage veränderbar ist, **dadurch gekennzeichnet, dass** das Stellglied (7) an dem Gehäuse (11) der Einrichtung (6) bewegbar gehalten ist, so dass zum Verändern des radialen Abstandes der Spannflächen (3) zu der Mittelachse (4) in der ausgestellten Lage das Stellglied (7) eine Bewegung in Richtung der Mittelachse (4) ausführt und dazu das Stellglied (7) durch einen koaxial bezüglich der Mittelachse (4) angeordneten Wellenabschnitt (12) gebildet ist, welcher an seinem einen axialen Ende ein Gewinde (13) trägt, das mit einem korrespondierenden Gewinde des Gehäuses (11) kämmt.

2. Vorrichtung nach Anspruch 1, **dadurch gekennzeichnet, dass** das Stellglied (7) zum Einstellen des radialen Abstandes der Spannflächen (3) zu der Mittelachse (4) in der ausgestellten Lage der Spannelemente (2) in Abhängigkeit von der Temperatur, insbesondere Umgebungstemperatur, ausgebildet ist.

3. Vorrichtung nach Anspruch 1 oder 2, **dadurch gekennzeichnet, dass** Fixiermittel vorgesehen sind, durch welche der radiale Abstand der jeweiligen Spannfläche (3) zu der Mittelachse (4) in der ausgestellten Lage festlegbar ist.

4. Vorrichtung nach Anspruch 3, **dadurch gekennzeichnet, dass** die Fixiermittel unabhängig von dem Stellmechanismus des Stellgliedes (7) zum Verändern des radialen Abstandes der jeweiligen Spannfläche (3) zu der Mittelachse (4) in der ausgestellten Lage wirken.

5. Vorrichtung nach Anspruch 3 oder 4, **dadurch gekennzeichnet, dass** die Fixiermittel durch wenigstens ein Fixierelement (16) gebildet sind, welches an dem Gehäuse (11) der Einrichtung (6) oder an dem Stellglied (7) bewegbar gehalten ist und gegen das Stellglied (7) oder das Gehäuse (11) kraftschlüssig und/oder formschlüssig in Wirkstellung bringbar ist, um den eingestellten radialen Abstand der jeweiligen Spannfläche (3) zu der Mittelachse (4) in der ausgestellten Lage festzulegen.

6. Vorrichtung nach einem der vorhergehenden Ansprüche, **dadurch gekennzeichnet, dass** eine elektrische Steuereinheit vorgesehen ist, welche die Einrichtung (6) zum Bewegen der Spannelemente (2) derart ansteuert, dass in mehreren aufeinanderfolgenden Zyklen die Spannelemente (2) von der Ausgangslage in eine Zwischenlage oder die ausgestellte Lage und von dort zurück in eine Zwischenlage oder die ausgestellte Lage bewegt werden.

7. Vorrichtung nach einem der vorhergehenden Ansprüche, **dadurch gekennzeichnet, dass** die Spannelemente (2) in radialer Richtung bezüglich der Mittelachse (4) über eine Strecke bewegbar sind, welche kleiner als der radiale Abstand der Innenfläche des abschließend aufgeweiteten Rohrendes zu der Mittelachse (4) ist.

8. Vorrichtung nach einem der vorhergehenden Ansprüche, **dadurch gekennzeichnet, dass** eine optische und/oder akustische Ausgabeeinheit vorgesehen ist, welche den radialen Abstand der Spannflächen (3) zu der Mittelachse (4) in der ausgestellten Lage der Spannelemente (2) direkt und/oder indirekt, beispielsweise als Übermaßangabe oder Durchmesserangabe, ausgibt.

9. Verwendung einer Vorrichtung nach einem der Ansprüche 1 bis 8 zum Aufweiten des Endes eines Rohres, welches aus einem ein Formgedächtnis aufweisenden Kunststoff besteht.

## Claims

1. Device (1) for expanding the end of a tube (100) which consists of plastic having a shape memory, comprising multiple clamping elements (2) which have a clamping surface (3) that can be brought into a working position against the inner surface of the tube end and can be moved in the radial direction with respect to a central axis (4) from an initial position into an outwardly placed position, where, in the initial position, the clamping elements (2) can be inserted into the tube end over a predefined length section and, in the outwardly placed position, the clamping elements (2) can be brought into the working position with their clamping surface (3) against the inner surface of the tube end, so that, by changing the clamping elements (2) inserted into the tube end from the initial position into the outwardly placed position, the tube end is expanded, comprising an apparatus (6) for moving the clamping elements (2) from the initial position into the outwardly placed position and preferably back into the initial position, and comprising an actuator (7), by means of which the radial spacing of the respective clamping surface (3) from the central axis (4) in the outwardly placed position can be varied,
**characterized in that** the actuator (7) is held movably on the housing (11) of the apparatus (6), so that to change the radial spacing of the clamping surfaces (3) from the central axis (4) in the outwardly placed position, the actuator (7) executes a movement in the direction of the central axis (4) and, for this purpose, the actuator (7) is formed by a shaft section (12) which is arranged coaxially with respect to the central axis (4) and which, at its one axial end, bears a thread (13) which meshes with a corresponding thread of the housing (11).

2. Device according to Claim 1, **characterized in that** the actuator (7) is designed to set the radial spacing of the clamping surfaces (3) with respect to the central axis (4) in the outwardly placed position of the clamping elements (2) as a function of the temperature, in particular ambient temperature.

3. Device according to Claim 1 or 2, **characterized in that** fixing means are provided, by means of which the radial spacing of the respective clamping surface (3) with respect to the central axis (4) in the outwardly placed position can be fixed.

4. Device according to Claim 3, **characterized in that** the fixing means act independently of the actuating mechanism of the actuator (7) for varying the radial spacing of the respective clamping surface (3) with respect to the central axis (4) in the outwardly placed position.

5. Device according to Claim 3 or 4, **characterized in that** the fixing means are formed by at least one fixing element (16), which is held movably on the housing (11) of the apparatus (6) or on the actuator (7) and can be brought into the working position against the actuator (7) or the housing (11) in a force-fitting and/or form-fitting manner, in order to fix the set radial spacing of the respective clamping surface (3) with respect to the central axis (4) in the outwardly placed position.

6. Device according to one of the preceding claims, **characterized in that** an electric control unit is provided, which activates the apparatus (6) for moving the clamping elements (2) in such a way that, in a plurality of successive cycles, the clamping elements (2) are moved from the initial position into an intermediate position or the outwardly placed position and back from there into an intermediate position or the outwardly placed position.

7. Device according to one of the preceding claims, **characterized in that** the clamping elements (2) can be moved in the radial direction with respect to the central axis (4) over a distance which is shorter than the radial spacing of the inner surface of the finally expanded tube end with respect to the central axis (4).

8. Device according to one of the preceding claims, **characterized in that** an optical and/or acoustic output unit is provided, which outputs the radial spacing of the clamping surfaces (3) with respect to the central axis (4) in the outwardly placed position of the clamping elements (2) directly and/or indirectly, for example as over-dimension information or diameter information.

9. Use of the device according to one of Claims 1 to 8 for expanding the end of a tube which consists of plastic having a shape memory.

## Revendications

1. Dispositif (1) destiné à évaser l'extrémité d'un tuyau (100), lequel est composé d'une matière plastique à mémoire de forme, avec plusieurs éléments de contrainte (2), lesquels comportent une surface de contrainte (3) qui peut être amenée en position active contre la surface intérieure de l'extrémité du tuyau et qui dans la direction radiale, par rapport à un axe médian (4) sont déplaçables d'une position de départ dans une position écartée vers l'extérieur, dans la position de départ, les éléments de contrainte (2) pouvant s'introduire dans l'extrémité du tuyau sur un tronçon de longueur prédéfinie et dans la position écartée, par leur surface de contrainte (3), les éléments de contrainte (2) étant amenés en position active contre la surface intérieure de l'extrémité du tuyau, de sorte que lors du passage des éléments de contrainte (2) introduits dans l'extrémité du tuyau de la position de départ dans la position écartée, l'extrémité du tuyau s'évase, avec un système (6) destiné à déplacer les éléments de contrainte (2) de la position de départ dans la position écartée et de préférence à nouveau dans la position de départ et avec un actionneur (7), par lequel l'écart radial entre la surface de contrainte (3) respective et l'axe médian (4) dans la position écartée est variable **caractérisé en ce que** l'actionneur (7) est maintenu en étant mobile sur le boîtier (11) du système (6), de sorte que pour faire varier l'écart radial entre les surfaces de contrainte (3) et l'axe médian (4) dans la position écartée, l'actionneur (7) réalise un déplacement dans la direction de l'axe médian (4) et à cette fin, l'actionneur (7) est formé par un tronçon d'arbre (12) placé de manière coaxiale par rapport à l'axe médian (4), qui sur son une extrémité axiale porte un filetage (13) qui s'engrène dans un taraudage correspondant du boîtier (11).

2. Dispositif selon la revendication 1, **caractérisé en ce que** l'actionneur (7) est conçu pour régler l'écart radial entre les surfaces de contrainte (3) et l'axe médian (4) dans la position écartée des éléments de contrainte (2) en fonction de la température, notamment de la température ambiante.

3. Dispositif selon la revendication 1 ou la revendication 2, **caractérisé en ce que** des moyens de fixation sont prévus, avec lesquels l'écart radial entre la surface de contrainte (3) respective et l'axe médian (4) peut être fixé dans la position écartée.

4. Dispositif selon la revendication 3, **caractérisé en ce que** les moyens de fixation agissent indépendamment du mécanisme de réglage de l'actionneur (7) pour faire varier l'écart radial entre la surface de contrainte (3) respective et l'axe médian (4) dans la position écartée.

5. Dispositif selon la revendication 3 ou la revendication 4, **caractérisé en ce que** les moyens de fixation sont formés d'au moins un élément de fixation (16) qui est maintenu en étant mobile sur le boîtier (11) du système (6) ou sur l'actionneur (7) et qui peut être amené en position active par complémentarité de force et/ou par complémentarité de formes contre l'actionneur (7) ou le boîtier (11), pour fixer l'écart radial réglé entre la surface de contrainte (3) respective et l'axe médian (4) dans la position écartée.

6. Dispositif selon l'une quelconque des revendications précédentes, **caractérisé en ce qu'**il est prévu une unité de commande électrique, laquelle actionne le système (6) pour déplacer les éléments de contrainte (2) de telle sorte qu'en plusieurs cycles successifs, les éléments de contrainte (2) soient déplacés de la position de départ dans une position intermédiaire ou dans la position écartée et de là, à nouveau dans la position intermédiaire ou dans la position écartée.

7. Dispositif selon l'une quelconque des revendications précédentes, **caractérisé en ce que** les éléments de contrainte (2) sont déplaçables dans la direction radiale par rapport à l'axe médian (4) sur une course qui est inférieure à l'écart radial entre la surface intérieure de l'extrémité du tuyau évasé en position finale et l'axe médian (4).

8. Dispositif selon l'une quelconque des revendications précédentes, **caractérisé en ce qu'**il est prévu une unité d'édition optique et/ou acoustique, laquelle édite l'écart radial entre les surfaces de contrainte (3) et l'axe médian (4) dans la position écartée des éléments de contrainte (2) directement et/ou indirectement, par exemple sous la forme d'une indication de surdimension ou d'une indication de diamètre.

9. Utilisation d'un dispositif selon l'une quelconque des revendications 1 à 8 pour évaser l'extrémité d'un tuyau, lequel est composé d'une matière plastique à mémoire de forme.
